# EUROPEAN PATENT APPLICATION

(11) **EP 1 946 915 A1**
(43) Date of publication of application: **23.07.2008**
(21) Application number: 07100886.6
(22) Date of filing: 22.01.2007
(51) Int. Cl.: B29D 31/00, B29C 70/44, B29C 70/54, B29C 43/54, B29C 33/48, B29C 33/30

(54) **A method and apparatus for manufacture of a profile element**

(71) Applicant: SAAB AB, 581 88 Linköping (SE)
(72) Inventor: KROGAGER, Max, 582 42, LINKÖPING (SE); PETERSSON, Mikael, 585 90, LINKÖPING (SE); WEIDMANN, Björn, 590 31, BORENSBERG (SE)
(74) Representative: Winblad, Hans Peter

(57) **Abstract**

The present invention relates to a method and an apparatus (1) for manufacturing of a profile element (3) comprising a web portion (5), a first and second flange portion (6, 7), which extend from the web portion (5) and being disposed essentially opposite each other, the method being performed by folding a blank (21) of composite material about a first (13) and second flange forming surface (15) of an forming tool (11).

The method comprises the following steps of setting the forming tool's (11) at least one flange forming surface (13) a distance from the other flange forming surface (15) greater than the desired distance between the flange portion's (6, 7) inner surfaces (41) of the finished profile element (3); curing the folded blank (21) and simultaneously controlling a gradual decrease of the distance between the flange forming surfaces (13, 15); and removing the cured profile element (3) from the forming tool (11).

## Description

### TECHNICAL FIELD OF THE INVENTION

The present invention relates to a method for manufacture of a profile element, such as a C-beam, Ω-beam etc., according to the pre-characterising part of claim 1, and to an apparatus for manufacture of the profile element according to the pre-characterising part of claim 8. The present invention relates, but not limited, to aircraft industry.

### BACKGROUND OF THE INVENTION

Methods for manufacture of composite structural profile elements using "prepreg" material (layers of fibre material previously impregnated with resin, such as thermosetting resin) exist today. When manufacture of profile elements (such as aircraft ribs, beams etc. having for example a C-shaped cross section) of composite material, the profile element is formed by application of prepreg material over a male tool portion having the forming surfaces, thereby forming the flange and web portions.

Today for certain applications is commonly used forming tools having their male tool portion arranged compact and sturdy (as homogeneous tool bodies) or ineffectively adjustable, onto which a blank of prepreg material (e.g. thermo setting plastic, epoxi resins, thermoplastics, polyester resins, fibreglass reinforced plastics etc.) is to be applied in the process of production of structural profile beams. Male tool portions having a non adjustable tool body for forming the profile element under the curing are commonly used for the production of essentially straight profile elements having a relatively large thickness (can be greater than 5 mm) The blank applied onto the forming surfaces of the forming tool will be cured, with or without the influence of heating, wherein shrinkage tensions of the plastic material appear, which have a tendency to delaminate the formed blank, especially within the area of the junction between the flanges and web. These tension forces also are common when the thickness of the composite material is more than 5 mm. This shrinkage tension forces result often in cracks within the area of the junctions and further prepreg material or epoxi must be applied to this area, afterwards, when the beam has been removed from the male tool portion. This is a disadvantage since it often means that tolerance deviations of the finished element prevail and furthermore an addition of weight due to the necessary application of further reinforcement material to the junctions. Especially when the profile element is to be used in an aircraft, this will be a great disadvantage, due to the added weight. The shrinkage tensions within the straight profile element generated during curing also will make the element's flanges to press inwardly, wherein a clamping action of the profile element about the male tool portion will occur after fulfilled curing. This means that it will be difficult to remove the finished cured profile element from the forming tool and the finished profile element has to be broke loose from the tool resulting in eventual damages in the composite material, making a not cost-effective manufacture.

US 4 451 528 discloses a composite plastic structural profile element having a web and two flanges and a method of manufacture of the same. The web comprises a reinforcing layer for increasing the strength properties of the profile element, and still providing a low-weight profile element.

The object of the present invention is to overcome the drawbacks of known methods and apparatuses for providing manufacture of the profile element.

### SUMMARY OF THE INVENTION

This has been solved by a method being defined in the introduction, the method is characterised by the steps claimed in claim 1.

In such a way no tension forces will appear in the blank during curing causing cracks in the junctions between the web portion and the flange portions. No delamination will occur since the composite material will be unloaded during curing by the setting of the forming tool's flange forming tool portions "straddle legged" before curing. When the gelling process during curing starts, the flange forming tool portions are moved back towards each other slowly until desired angle between the flanges and the web is achieved and the curing is fulfilled. Due to the setting of the forming tool's at least one flange forming surface a distance from the other flange forming surface greater than the desired distance between the flange portions' inner surfaces of the finished profile element and moving the tool's flange forming surfaces towards each other during curing, no spring back effect will occur, as the composite material will be unloaded during curing. By way of empirical values regarding the actual composite material properties, the motion rate of the flange tool portions towards each other during the curing process can be predetermined and set from the type of material in the blank for production. That is, setting of the flange tool portions a distance away from each other before curing, wherein said distance essentially corresponds with the distance performed by a profile elements flanges moving towards each other, by the spring back effect, when being removed from conventional prior art forming tools after curing.

Preferably, the step of curing the blank includes the process of heating the blank applied onto the forming tool.

In such a way controllable the curing process can be controlled relative the controlling of the gradual decrease of the distance between the flange forming surfaces. Heating means can be arranged in the middle portion of the longitudinal male tool, which provides heat to the blank's centre before the ends of the blank being heated, thereby starting the curing procedure in the middle part of the blank, which is advantageous since the tension forces caused by the curing process, shrinking the blank material, will progress outwardly thus minimising the compression of the blank in its plane.

Suitably, a step of applying the blank onto the forming tool has subsequent further steps of attaching a sensing device to the blank for detection of the blank's material properties and controlling said rate of gradual decrease of the distance between the flange forming surfaces from the actual composite material properties of the blank being detected by the sensing device during curing.

Thereby no empirical values regarding the actual composite material properties has to be considered due to the use of the sensing device. The blank's material properties are detected by the sensing device. The sensing device can comprise a strain meter, a strain-gauge for attachment onto the blank's surface for detecting the strain, etc. Thus the motion rate of the flange tool portions towards each other during the curing process can be controlled in a cost effective manner. Also several sensing devices may detect particular areas of the blank being affected by different forming tool settings during the curing. For manufacture of a curved profile element this may be advantageous for detecting various portions of the blank being formed.

Alternatively, the curing of the blank is performed by sealing the blank in a vacuum bag, evacuating air from the vacuum bag and heating the blank by means of a heating means.

In such a way the profile element can be finished in a short time and in a manner not involving any further application of reinforcing material to the composite.

Preferably, the method also comprises the step of controlling the forming tool to also decrease the distance between the first and second flange forming surfaces after curing and before the step of removing the finished cured profile element.

Thereby it will be easy to remove the finished profile element from the forming tool.

Suitably, the step of controlling the first and second flange forming surface of a first and a second flange forming tool portion respectively, from and towards each other, is performed by inflation and deflation of air bags being arranged between the first and second flange forming tool portions.

In such a way the air bags can be used for adjusting the flange forming tool portions towards and from each other at the same time as the air bags can be used for cooling or heating selected particular areas of the forming tool for slower or faster curing during the curing procedure. That is, for example the centre of the forming tool's male tool portion may be heated before heating the ends of the male tool portion for starting the curing procedure in the middle.

Alternatively, the step of controlling the at least one flange forming surface is performed by angular motion of the at least one flange forming surface relative a vertical.

Thereby the forming tool and its flange forming tool portions can be easy and cost effective to provide. By arranging a hinge element between the respective flange forming tool portion and the forming tool's web forming tool portion, the movable flange forming tool portions can be set straddle legged in relation to the finished element's profile, which relation corresponds to the actual, created by shrinkage forces, inwardly bending of the flanges of the profile element (from the starting point of curing till completed curing).

This has also been solved by an apparatus for manufacture of a profile element being described in the introduction, the apparatus being characterised by the features claimed in the characterising part of claim 8.

In such way an apparatus is achieved which provides for a cost effective production of profile elements of plastic, such as C-beams, both straight and curved, especially profile elements having a wall thickness of 1 -60 mm. Due to the apparatuses performance of a controlled gradual motion of the flange forming tool portions towards each other, corresponding to the so called "spring back" effect caused by intrinsic tensions of the blank being cured, an profile element is manufactured without cracks within the area of junctions between the flange and web portions of the profile element.

Preferably, the apparatus comprises a sensing device attachable to the blank for detecting of the actual composite material properties of the blank during curing, the sensing device being connected to the control unit.

Suitably, the apparatus comprises a web forming tool portion connected to the first flange forming tool portion and to a second flange forming tool portion via flexible junctions.

Alternatively, at least an inflatable air bag is arranged between the flange forming tool portions, the air bag is connected to an air pressure source being controlled by the control unit.

In such way the apparatus can be used for various applications and can be arranged for controlled curing, wherein the air bags is used in co-operation with heating means at the same time as a controllable motion of the flange forming tool portions is provided.

### BRIEF DESCRIPTION OF THE DRAWINGS

The present invention will now be described by way of example with reference to the accompanying schematic drawings, of which:
FIG. 1a illustrates an apparatus for manufacturing of a profile element according to a first embodiment;
FIG. 1b illustrates the apparatus in FIG. 1a, having its flange forming tool portions set a distance from each other in a start position;
FIG. 1c illustrates the apparatus in FIG. 1a, having a blank being applied onto the forming surfaces of the forming tool;
FIG. 1d illustrates the apparatus in FIG. 1a, wherein the flange forming tool portions have been gradually moved towards each other during curing of the blank to an end position corresponding to the profile of the element;
FIG. 1e illustrates the apparatus in FIG. 1a, wherein only one flange forming tool portion is set "straddle legged";
FIG. 2 illustrates a second embodiment having only one movable flange forming tool portion for forming an essential L-profile element;
FIG. 3a illustrates an apparatus according to a third embodiment;
FIG. 3b illustrates the apparatus in FIG. 3a and a blank with a sensing device;
FIG. 3c illustrates the apparatus in FIG. 3a, wherein the flange forming tool portions are moved a distance further than the end position after fulfilled curing;
FIG. 4 illustrates an apparatus according to a fourth embodiment;
FIG. 5 illustrates an apparatus according to a fifth embodiment; and
FIGS. 6a - 6c illustrate a forming tool according to prior art.

### DETAILED DESCRIPTION OF THE PREFERRED EMBODIMENTS

Hereinafter, embodiments of the present invention will be described in detail with reference to the accompanying drawings, wherein for the sake of clarity and understanding of the invention some details of no importance are deleted from the drawings.

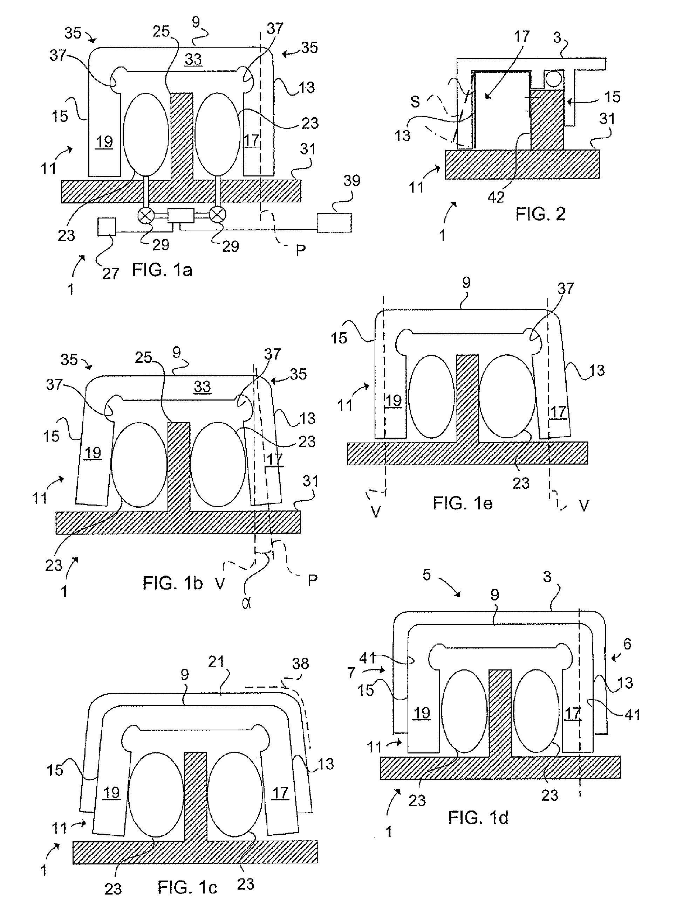

FIG. 1a illustrates an apparatus 1, according to a first embodiment, for manufacturing of an elongated profile element 3 (see FIG. 1d). The profile element 3 comprises a web portion 5. A first flange portion 6 and a second flange portion 7 extend from the web portion 5. The apparatus 1 comprises a web forming surface 9 of a male forming tool 11. The male forming tool 11 further comprises a first flange forming surface 13 and a second flange forming surface 15. The first flange forming surface 13 being comprised in a first flange forming tool portion 17 of the male forming tool 11. The second flange forming surface 15 being comprised in a second flange forming tool portion 13 of the male forming tool 11.The male forming tool 11 is arranged for forming a blank 21 (see FIG. 1c) of composite material.

The blank 21 of composite material or plastic, such as thermosetting resin, is made by an ATL (automatic tape laying)-apparatus (not shown). A typical composite blank 21 consists of several plies of tape laid up at various ply angles. A "ply" consists of one layer of tape courses (fibres) oriented at a given angle.

The apparatus 1 further comprises a plurality of inflatable air bags 23, of which only two is shown, being arranged on both sides of a holding-up part 25 of the male forming tool 11. Each air bag 23 is in contact with the flange forming tool portion's inner side and the holding-up part 25. The air bags 23 are connected to an air pressure source 27 (only shown in FIG. 1a) via control valves 29 for controlling the inflation of the air bags 23. The control valves 29 are also adapted for the discharge of air from the air bags 23. The holding-up part 25 is a part of a fundament 31 onto which the flange forming tool portions 17, 19 rest and are guided relatively the fundament 31 during the forming process being described further below.

The first flange forming tool portion's 17 first flange forming surface 13 and the web forming surface 9 are arranged movable relative each other by that a web forming tool portion 33 is connected to the first flange forming tool portion 17 and to the second flange forming tool portion 19 via flexible junctions 35. The first and second flange forming tool portions 17, 19 and the web forming tool portion 33 constitute the as in one piece formed male forming tool 11. The flexible junctions 35 are achieved by cavities 37 formed within the area of the junctions 35 inside the male forming tool 11. In FIG. 1a is illustrated a plane P of each of the flange forming tool portions 17, 19.

FIG. 1b illustrates the male forming tool 11 of FIG. 1a having its flange forming tool portions 17, 19 set a distance from each other in a start position by means of a control unit 39 (se FIG. 1a) being connected to the control valves 29 for controlling the inflation of the air bags 23 for movement of the flange forming tool portions 17, 19 to the start position. The air bags 23 are inflated sufficiently such that the flange forming surfaces 13, 15 are set at a distance from the each other greater than the desired distance between the flange portion's 6, 7 inner surfaces 41 of the finished profile element 3 (se FIG. 1d). An angle α is set between the vertical V and a set position of the plane P of each of the flange forming tool portions 17, 19.

The blank 21 of prepreg material (e.g. thermo setting plastic) is applied onto the male forming tool's 11 web forming 9 and flange forming surfaces 13, 15, as shown in FIG. 1c. Thereafter the blank and the male forming tool 11 are sealed in a vacuum bag 38 (only shown partly with a dashed line). Air is gradually evacuated from the vacuum bag 38. The blank 21 also is heated by means of heating means (not shown) adapted for the curing process. The control unit 39 controls the control valves 29 (not shown in FIG. 1c, see FIG. 1a) for causing a gradual motion of the first and second flange forming tool portions 17, 19 (by discharging air from the air bags) towards each other from the start position, taking account of the actual composite material properties of the blank 21 during curing. That is, considering empirical values regarding the properties of the blank 21 during curing, the motion of the flange forming surfaces 13, 15 towards each other is adjusted successively such that when the blank 21 cures, no cracks appear caused by a "spring back effect" within the plastic. The operation is performed by curing the folded blank 21 and simultaneously controlling a gradual decrease of the distance between the flange forming surfaces 13, 15. No delamination will occur since the composite material will be unloaded during curing by the setting of the forming tool's flange forming tool portions 17, 19 "straddle legged" before curing and thereafter moving them toward each other during curing. For example, the angle α may be 1,2 degrees for a common composite material, but can also be any angle between 0,5 -3 degrees, preferably 0,8-2,0 degrees.

When the gelling process during curing starts, the flange forming tool portions 17, 19 are moved towards each other slowly until a desired angle (i.e. the plane P of the flange forming tool portions 17, 19 respectively corresponds again with the vertical V (α = 0 degrees) between the respective flange portion 6, 7 and the web portion 5 of the profile element 3 (here 90 degrees) is achieved and the curing is fulfilled.

When the gradual motion of the first and second flange forming tool portions 17, 19 towards each other stops, the blank 21 has been formed to a profile element 3, wherein the curing process essentially being finished. This is shown in FIG. 1d. The air bags 23 are thus deflated and are in a state corresponding with the air bag state shown in FIG. 1a.

FIG. 1d illustrates the apparatus 1 in FIG. 1a, wherein only one flange forming tool portion 17 is set "straddle legged". By means of the control unit 39 only the air bags 23 arranged at one side of the male forming tool 11 are inflated. This is advantageous when the blank 21 has a thickness of one of the profile element flanges being thicker than the other flange. The thin portion of the blank 21 forming this other flange has beforehand determined (from empirical estimation) properties wherein no delamination is considered to occur. The composite material of the thin portion will be unloaded during curing, due to the thin-walled flange, and no setting of the forming tool's 11 flange forming tool portion 19 related to this thin-walled blank portion has to be performed before curing.

In FIG. 2 being illustrated a second embodiment, wherein the apparatus 1 having only one movable flange forming tool portion 17 for forming an essential L-profile element 3. The male forming tool 11 has a fundament 31 and an upstanding part 42 onto which the flange forming tool portion 17 is fitted. The flange forming tool portion 17 is adjustable by means of a screw adjusting device (not shown). The curing of the blank is performed by sealing the blank in a vacuum bag, evacuating air from the vacuum bag, heating the blank by means of a heating means (placed near the vacuum bag, not shown) and a by the subsequent step of moving the flange forming tool portion 17 from the start position S (shown with dashed line) towards the position where the finished profile element 3 is completely cured.

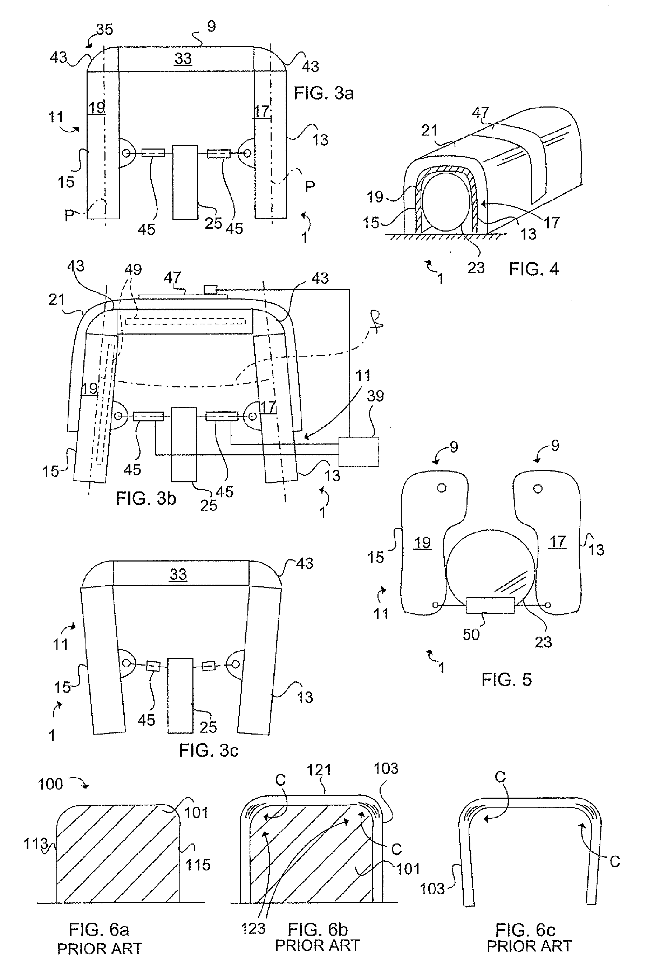

FIGS. 3a-3c illustrate an apparatus 1 according to a third embodiment. The web forming tool portion 33 is connected to the flange forming tool portions 17, 19 via hinge elements 43. Each flange forming tool portion 17, 19 of the male forming tool 11 is connected to a holding up part 25 (being a fixed part relatively the flange forming tool portions 17, 19) via elongated hydraulic cylinders 45 controlled by the control unit 39. In FIG. 3b is shown the start position wherein the blank 21 is placed onto the male forming tool 11. The flange forming tool portions 17, 19 of the apparatus 1 is set with an angle β of 2,4 degrees. The angle is set independently of the thickness of the blank material. This embodiment of the apparatus 1 comprises a sensing device 47 attachable to the blank 21 for detecting the actual composite material properties of the blank 21 during curing. The sensing device 47 being connected to the control unit 39.

The prepared blank 21 (prepared by means of an ATL-apparatus, not shown) is placed onto the male forming tool 11 set in the starting position. The blank 21 is clear for curing by means of a heating means 49. Thereafter the sensing device 47 is attached onto the blank 21 for detection of the blank's 21 material properties during curing. The control unit 39 controls the rate of motion of the flange forming tool portions 17, 19 towards each other (by means of the hydraulic cylinders 45) from the actual properties of the blank material during curing detected by the sensing device 47. That is, the control unit 39 controls said rate of gradual decrease of the distance between the flange forming surfaces 13, 15 from the actual composite material properties, wherein the flange forming surfaces 13, 15 make an angular motion relative a vertical.

In FIG. 3c is shown that the control unit 39 has controlled the flange forming tool portions 17, 19 to decrease the distance further (from a position wherein the flange forming tool portions 17, 19 are parallel with each other and wherein the finished profile element 3 is cured completely). That is, the control unit 39 controls the male forming tool 11 to also decrease the distance between the flange forming surfaces 13, 15 after curing and before the step of removing the finished cured profile element 3. Thereby it will be easy to remove the finished profile element 3 from the male forming tool 11.

FIG. 4 illustrates an apparatus 1 according to a fourth embodiment. According to this embodiment a series of inflatable air bags 23 is arranged within a male forming tool 11 without any holding-up part. The control unit (not shown) controls the first and second flange forming surface 13, 15 of the first and the second flange forming tool portion 17, 19 respectively of the male forming tool 11. The motion of the flange forming tool portions 17, 19 from and towards each other is performed by inflation and deflation of the air bags 23 being arranged between the first and second flange forming tool portions 17, 19. The control unit is also adapted for controlling individually arranged heating means (not shown) placed along the male forming tool 11. For example, heating means disposed in the centre of the longitudinal extension of the male forming tool 11 may be heated first-hand during the curing and outer disposed heating means (in direction towards the ends of the male forming tool 11) being heated secondary. According to this embodiment the heating means are arranged integrally with the each air bag. That is, heated air of different temperature is supplied into individual air bags 23, which process is provided by the control unit. In such a way the air bags 23 can be used for adjusting the flange forming tool portions 17, 19 towards and from each other at the same time as the air bags 23 can be used for cooling or heating selected particular areas of the male forming tool 11, transferring the heat to the blank for curing, for slower or faster curing of the blank 21. That is, for example the centre of the apparatus 1 male forming tool may be heated before the ends being heated for starting the curing procedure in the middle of the blank 21, which is advantageous for the curing process.

FIG. 5 illustrates an apparatus 1 according to a fifth embodiment, wherein the flange forming tool portions 17, 19 are hinged and connected to a fundament (not shown) of the apparatus 1. The blank 21 is placed onto the male forming tool 11 set in a start position (flange forming tool portions 17, 19 are "straddle legged"), wherein the male forming tool's 11 web forming tool portion 33 partly is formed by the upper sides of the flange forming tool portions 17, 19 creating the web forming surface 9. For an exact adjustment, in co-operation with the deflation of the air bags 23, withdrawal of the flange forming tool portions 17, 19 is performed by means of an actuator means 50.

FIGS. 6a and 6b illustrate a forming tool 100 according to prior art. An essentially homogenous male forming tool body 101 having flange forming surfaces 113, 115 is illustrated in Fig. 6a. A blank 121 of composite material or plastic, such as thermosetting resin, is applied onto the male forming tool body 101 for curing. During the curing process shrinkage tensions of the plastic material occur which may create cracks, marked in FIG. 6b with C within the area of the junction 123 between the flanges and web of the profile element 103. These tension forces also are common when the thickness of the composite material is more than 5 mm. Often, further prepreg material or epoxi must afterwards has to be applied to this junction area 123 when the profile element 103 (such as a C-beam) has been removed from the male tool body 101. In FIG. 6c is illustrated the finished profile element 103 being removed from the male forming body 101. The so called "spring back " effect is schematically illustrated, due to the intrinsic shrinkage tensions still appearing even after the blank 121 is completely cured. The "spring back" effect means that the finished profile element 103 will be clamped about the male tool body 101. This is not cost-effective regarding the production of the profile elements 103. Also is shown in FIG. 6c cracks (delaminations) within the composite material occurring between the composite layers due to the shrinkage tensions.

The present invention is of course not in any way restricted to the preferred embodiments described above, but many possibilities to modifications or combinations of the described embodiments thereof should be apparent to a person with ordinary skill in the art without departing from the basic idea of the invention as defined in the appended claims. The composite plastic can be thermo setting plastic, epoxi resins, thermoplastics, polyester resins, fibreglass reinforced plastics etc. The forming and curing process of the blank can also use a female forming tool co-operating with the male forming tool. The heating means can be in the form of electrical heater element, radiators, heating resistor elements, heated fluid etc.

## Claims

1. A method for manufacturing of a profile element (3) comprising a web portion (5), a first and second flange portion (6, 7), which extend from the web portion (5) and being disposed essentially opposite each other, the method being performed by folding a blank (21) of composite material about a first (13) and second flange forming surface (15) of an forming tool (11), the method **comprises the following steps of:**
- setting the forming tool's (11) at least one flange forming surface (13) a distance from the other flange forming surface (15) greater than the desired distance between the flange portion's (6, 7) inner surfaces (41) of the finished profile element (3);
- curing the folded blank (21) and simultaneously controlling a gradual decrease of the distance between the flange forming surfaces (13, 15); and
- removing the cured profile element (3) from the forming tool (11).

2. The method according to claim 1, **wherein** the step of curing the blank (21) includes the process of
- heating the blank (21) applied onto the forming tool (11);

3. The method according to claim 1 or 2, **wherein** a step of applying the blank (21) onto the forming tool (11) has subsequent further steps of:
- attaching a sensing device (47) to the blank (21) for detection of the blank's (21) material properties; and
- controlling the rate of gradual decrease of the distance between the flange forming surfaces (13, 15) from the actual composite material properties of the blank (21) being detected by the sensing device (47) during curing.

4. The method according to any of claim 1 to 3, **wherein** the curing of the blank (21) is performed by:
- sealing the blank (21) in a vacuum bag (3 8);
- evacuating air from the vacuum bag (38); and
- heating the blank (21) by means of a heating means (49).

5. The method according to any of the preceding claims, **wherein** the method also comprises the step of:
- controlling the forming tool (11) to also decrease the distance between the first and second flange forming surfaces (13, 15) after curing and before the step of removing the finished cured profile element (3).

6. The method according to any of the preceding claims, **wherein** the step of controlling the first and second flange forming surface (13, 15) of a first and a second flange forming tool portion (17, 19) respectively, from and towards each other, is performed by inflation and deflation of air bags (23) being arranged between the first and second flange forming tool portions (17, 19).

7. The method according to any of the preceding claims, **wherein** the step of controlling the at least one flange forming surface (13, 15) is performed by angular motion of the at least one flange forming surface (13, 15) relative a vertical (V).

8. An apparatus for manufacturing of a profile element (3), comprising a web portion (5), a first flange portion (6), which extends from the web portion (5), the apparatus (1) comprises a web forming surface (9) and a first flange forming surface (13) of a first flange forming tool portion (17) for forming a blank (21) of composite material, **characterised by** that the first flange forming tool portion (17) and the web forming surface (9) are arranged movable relative each other, and a control unit (39) for controlling a gradual motion of the first flange forming tool portion (17) and the web forming surface (9) towards each other from a start position, taking account of the actual composite material properties of the blank (21) during curing.

9. The apparatus according to claim 8, **wherein** the apparatus (1) comprises a sensing device (47) attachable to the blank (21) for detecting of the actual composite material properties of the blank (21) during curing, the sensing device (47) being connected to the control unit (39).

10. The apparatus according to claim 8 or 9, **wherein** the apparatus (1) comprises a web forming tool portion (33) connected to the first flange forming tool portion (17) and to a second flange forming tool portion (19) via flexible junctions (35).

11. The apparatus according to claim 10, **wherein** at least an inflatable air bag (23) is arranged between the flange forming tool portions (17, 19), the air bag (23) is connected to an air pressure source (27) being controlled by the control unit (39).
